(19) **Europäisches Patentamt**

**European Patent Office**

**Office européen des brevets**

(11) **EP 1 659 806 A1**

(12) **EUROPEAN PATENT APPLICATION**
published in accordance with Art. 158(3) EPC

(43) Date of publication:
**24.05.2006 Bulletin 2006/21**

(51) Int Cl.:
**H04Q 7/22** (1995.01)

(21) Application number: **03818520.3**

(22) Date of filing: **27.08.2003**

(86) International application number:
**PCT/JP2003/010815**

(87) International publication number:
**WO 2005/025253 (17.03.2005 Gazette 2005/11)**

(84) Designated Contracting States:
**DE FR GB**

(71) Applicant: **FUJITSU LIMITED**
**Kawasaki-shi,**
**Kanagawa 211-8588 (JP)**

(72) Inventors:
• **TANAKA, Atsuya,**
**c/o FUJITSU LIMITED**
**Kawasaki-shi,**
**Kanagawa 211-8588 (JP)**

• **TAJIMA, Yoshiharu,**
**c/o FUJITSU LIMITED**
**Kawasaki-shi,**
**Kanagawa 211-8588 (JP)**
• **FUJITA, Hiroshi,**
**c/o FUJITSU LIMITED**
**Kawasaki-shi,**
**Kanagawa 211-8588 (JP)**

(74) Representative: **HOFFMANN EITLE**
**Patent- und Rechtsanwälte**
**Arabellastrasse 4**
**81925 München (DE)**

(54) **HANDOVER METHOD AND BASE STATION CONTROL DEVICE**

(57) When handover control is performed in a wireless communication system in which a plurality of base stations and a plurality of mobile stations communicate wirelessly, the necessary radio resources are secured beforehand in a handover-destination radio base station before handover is performed, and handover is executed thereafter. In order to secure the radio resources, one or more mobile stations that are already communicating via the handover-destination base station are forcibly handed over to another radio base station, whereby the radio resources of the handover-destination radio base station are secured. This is followed by executing handover.

FIG. 7

**Description**

Technical Field

This invention relates to a handover control method and base station control apparatus. More particularly, the invention relates to a handover control method in a wireless communication system, which has a plurality of base stations and a base station control apparatus that controls the plurality of base stations, for performing communication wirelessly between the base stations and a mobile station, and to the base station control apparatus.

Background Art

The commercialization of CDMA (Code Division Multiple Access) communication systems is proceeding at a rapid pace. Commercial service for wideband CDMA (W-CDMA) systems, which are for exchanging not only voice and still pictures that form the principal service at the present time but also large quantities of data such as moving pictures, also has begun. The specifications for these have been set by the 3GPP (3rd Generation Partnership Project), which is an organization for standardizing 3rd generation mobile communication systems. The study of various specifications and their addition to existing specifications is continuing with the goal of attaining systems that can implement services having a quality higher presently available.

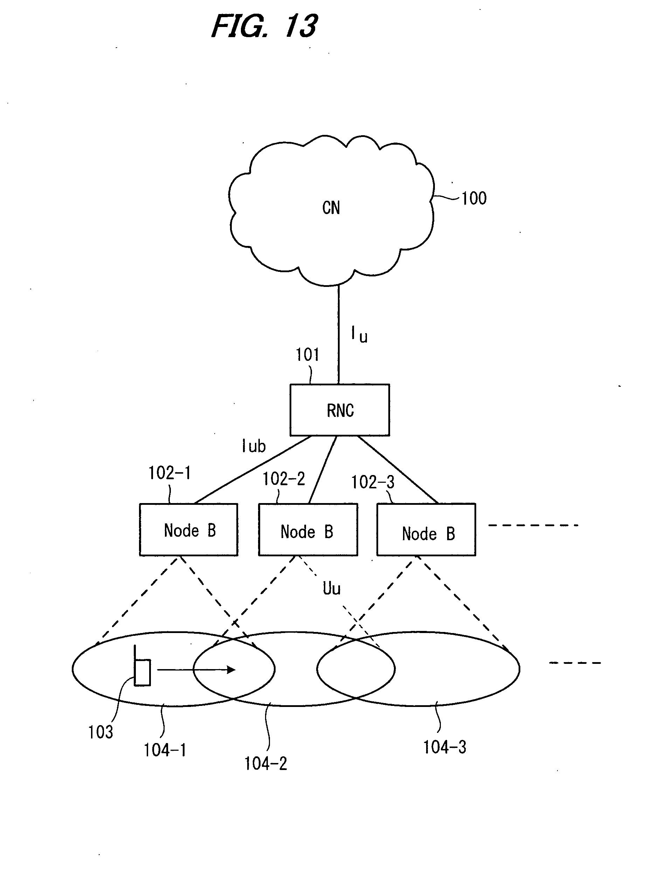

Fig. 13 is a diagram showing an overview of a W-CDMA system that is compliant with current 3GPP specifications. The system comprises nodes of four types, namely a host core network (CN: Core Network) 100, a radio network controller (RNC) 101, radio base stations (Node B) 102_0 to 102_n, and a mobile station (UE: User Equipment) 103. It should be noted that the radio network controller (RNC) shall be referred to as a Node B control station (base station control apparatus) below.

The nodes 100, 101 and 102_0 to 102_n are physically connected (in a wired section) by ATM (Asynchronous Transfer Mode) transmission paths and IP (Internet Protocol) transmission paths, etc. The radio base stations 102_0 to 102_n are connected to the mobile station 103 by radio signals (in a wireless section).

User data that has been issued from a terminal (not shown) toward the mobile station 103 is transmitted to the Node B control station 101, which accommodates the mobile station 103, via the core network 100. If the mobile station 103 is located in cell 104_1, the Node B control station 101 transmits the user data to the base station 102_1 that accommodates this cell, and the base station 102_1 transmits the user data to the mobile station 103. If the mobile station 103 subsequently continues to visit the cell 104_1, the Node B control station 101 exercises control in such a manner that the mobile station 103 will communicate with the terminal of the other party on the above-mentioned path.

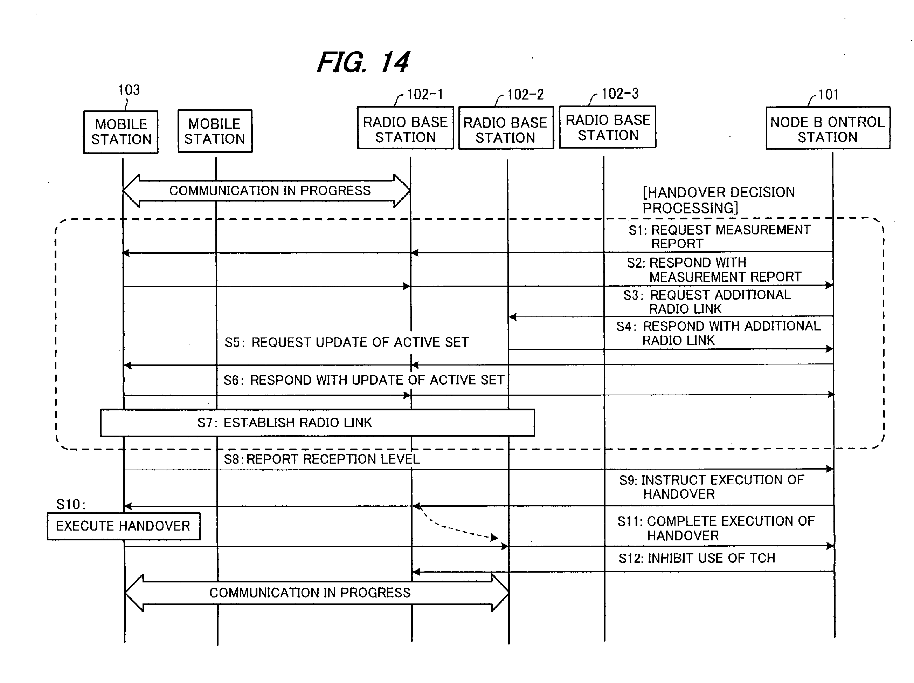

However, if the mobile station 103 roams into the adjacent cell 104-2, the Node B control station 101 changes over the relaying base station from the base station 102_1 to the base station 102_2 by handover control. Fig. 14 is a diagram useful in describing the procedure of such handover control.

When the mobile station 103 is communicating with the base station 102-1, the Node B control station 101 requests the mobile station 103 to periodically measure the radio conditions and report the result (step S1). Upon receiving the request to measure and report the radio conditions, the mobile station 103 measures the reception levels from the neighboring base stations 102-2, etc., and reports the result to the Node B control station 101 via the base station 102-1 currently communicating (step S2). On the basis of the report on radio conditions, the Node B control station 101 determines whether execution of handover is required or not. For example, if the reception field strength from the adjacent base station 102-2 is equal to or greater than a set value, then the Node B control station 101 determines that handover is necessary and instructs the adjacent base station 102-2 of a traffic channel TCH (request additional radio link; step S3). In response to the request for an additional radio link, the adjacent base station 102-2 sends a response to the request for the additional radio link back to the Node B control station 101 (step S4).

Next, the Node B control station 101 sends the mobile station 103 a request to prepare for handover (an active-set update request) via the base station 102-1 (step S5). Upon receiving the active-set update request, the mobile station 103 sends an active-set update response back to the Node B control station 101 (step S6) and establishes a radio link with the base station 102-2 by communicating on the traffic channel TCH (step S7).

If under these conditions the reception field strength from the base station 102-1 falls below the set level continuously in excess of a set period of time, the mobile station 103 notifies the Node B control station 101 of the reception level (step S8). By being so notified, the Node B control station 101 decides to terminate communication between the mobile station 103 and base station 102-1 and instructs the mobile station 103 to execute handover (step S9). Upon being instructed to execute handover, the mobile station 103 executes handover and continues communicating via the base station 102-2 (step S10). Next, the mobile station 103 transmits the fact that handover has been completed to the Node B control station 101 and severs the radio link to the base station 102-1 (step S11). Upon receiving notification of the fact that handover has been completed, the Node B control station 101 instructs the base station 102-1 to inhibit use of the traffic channel (step S12), thereby completing handover control. The mobile station 103 can subsequently continue communicating via the base station 102-2.

Various forms of such handover control have been proposed.

A first example of the prior art, which is for the purpose of dispersing traffic at each of the base stations, is characterized in that a base station at which the number of channels used has exceeded a certain threshold value hands over the communication mobile station to another base station (Patent Document 1).

A second example of the prior art is characterized by a handover-destination deciding algorithm for when resources are inadequate (Patent Document 2).

A third example of the prior art, which is related to a method whereby a mobile station selects a base station at the time of handover, is characterized in that the mobile station is handed over to a base station having many available resources (Patent Document 3).

A fourth example of the prior art is characterized in that a mobile station issues a connection request upon selecting a base station corresponding to the type of call at the time of call setup and handover in a multilayer cell (Patent Documents 4 to 7).

A fifth example of the prior art is characterized in that in a case where mobile stations are classified in accordance with the speeds of the mobile stations and a base station that is the destination of roaming has no available resources, channels are allocated to the mobile stations in order of decreasing class at the moment resources become available (Patent Document 8).

A sixth example of the prior art, which is related to a hierarchical cell configuration, is characterized in that the size of a base station area is changed in accordance with the traveling speed of a mobile station (Patent Document 9).

In the conventional mobile communication systems, opportunities for initiating handover in response to roaming of a mobile station are decided upon measuring electric field strength or amount of radio wave interference, and handover control is not performed taking into consideration the status of use and availability of radio resources at the radio base station that is the destination of handover. In the prior art, therefore, a problem which arises is that the radio resources of the radio base station that is the handover destination may be inadequate, making it impossible to secure a usable communication band.

More specifically, when handover is performed, it is required that the Node B control station allocate an amount of radio resources, which is equal to the amount of radio resources that were being allocated to the radio base station that is the source of handover, to the radio base station that is the destination of handover and set up a new radio channel in order to communicate with the mobile station. However, if the same amount of radio resources cannot be secured or if the electric field strength of the newly set-up radio channel is not suited to communication, radio resources are selected again or handover is suspended. The re-selection of radio resources is undesirable in that a long period of time is required until handover is completed, and suspending handover invites loss of calls. Further, even if communication per se can be continued, a major decline in throughput is invited and there is the danger that users will be inconvenienced.

Furthermore, there is prior art in which if, when mobile stations are classified into ordinary mobile stations and priority mobile stations and a call originates from a priority mobile station, there are no available resources, then an ordinary mobile station is forcibly handed over from a congested radio base station to a neighboring radio base station to thereby produce a vacancy, and the priority mobile station is then accommodated in the congested radio base station (Patent Document 10). However, this example of the prior art is not related to handover control initiated by roaming and does not hand over mobile stations that are unrelated to degree of priority.

Accordingly, an object of the present invention is to enable handover reliably and prevent a situation in which re-selection of radio resources and suspension of handover ascribable to handover failure is prevented.

Another an object of the present invention is to make it possible to perform handover reliably by exercising handover control that takes into account the status of use and availability of radio resources at a radio base station that is the destination of handover.

A further object of the present invention is to vary the timing of handover decision processing in accordance with communication service, communication speed and traveling speed, whereby handover can be performed efficiently and reliably without delay.

A further object of the present invention is to control a handover target area in accordance with traveling speed, thereby uniformalizing amount of base-station radio resources allocated even in an environment where traveling speed changes.

Patent Document 1: Japanese Patent Application Laid-Open No. 2001-175243
Patent Document 2: Japanese Patent Application Laid-Open No. 2001-251658
Patent Document 3: Japan Patent No. 3204088
Patent Document 4: Japanese Patent Application Laid-Open No. 9-200858
Patent Document 5: Japanese Patent Application Laid-Open No. 9-205679
Patent Document 6: Japanese Patent Application Laid-Open No. 9-200826
Patent Document 7: Japanese Patent Application Laid-Open No. 9-205673
Patent Document 8: Japan Patent No. 3072289

Patent Document 9: Japan Patent No. 2789987
Patent Document 10: Japanese Patent Application Laid-Open No. 3-107218

Disclosure of the Invention

According to a first aspect of the present invention, when handover control is performed in a wireless communication system, which has a plurality of base stations and a base station control station that controls the plurality of base stations, for performing communication wirelessly between the base stations and a mobile station, the necessary radio resources are secured beforehand in a handover-destination radio base station before handover is performed and handover is executed after the radio resources have been secured. More specifically, one or more mobile stations that are already communicating via the handover-destination base station are forcibly handed over to another radio base station, thereby freeing up the radio resources of the handover-destination radio base station. This is followed by executing handover. If this arrangement is adopted, handover can be achieved reliably and it is possible to prevent re-selection of radio resources and suspension of handover ascribable to handover failure.

According to a second aspect of the present invention, when handover control is performed in a wireless communication system, which has a plurality of base stations and a base station control station that controls the plurality of base stations, for performing communication wirelessly between the base stations and a mobile station, control is exercised to vary handover-execution decision timing based upon a combination of one or more of communication service, communication speed and traveling speed. By thus exercising control to vary handover-execution decision timing, handover-execution decision timing of a real-time service can be hastened and handover can be performed reliably without a momentary interruption.

Further, when handover is performed in high-speed data communication, it is necessary with the first aspect of the present invention to forcibly hand over many radio resources (many mobile stations) at the handover-destination radio base station. This requires sufficient time for preparations. In accordance with the second aspect of the present invention, it is possible to acquire sufficient time for preparations by hastening handover-execution decision timing and it is possible to perform handover efficiently and reliably.

Further, since handover ascribable to roaming occurs frequently at high-speed travel, it is highly likely that the necessary radio resources cannot be acquired. In accordance with the second aspect of the present invention, however, this problem is solved because handover-execution decision timing is hastened with an increase in traveling speed.

According to a third aspect of the present invention, when handover control is performed in a wireless communication system, which has a plurality of base stations and a base station control station that controls the plurality of base stations, for performing communication wirelessly between the base stations and a mobile station, a handover-decision threshold value is found from a function that is dependent upon a combination of communication service type, communication speed and traveling speed, the value of the function is adopted as a threshold value for start of handover-execution decision timing, and the higher the level of real-time service, the higher the communication speed and the higher the traveling speed, the more the threshold value is lowered to hasten the handover-execution decision timing. In accordance with the third aspect of the present invention, a threshold value is calculated from a function and handover-execution decision timing can be controlled in simple fashion. Moreover, actions and effects equivalent to those of the second aspect of the present invention can be obtained.

According to a fourth aspect of the present invention, when handover control is performed in a wireless communication system, which has a plurality of base stations and a base station control station that controls the plurality of base stations, for performing communication wirelessly between the base stations and a mobile station, a zone of base stations to be investigated for available radio resources is varied for every traveling speed of the mobile station to be handed over. With the first aspect of the present invention, it is necessary to examine the available radio resources of base stations in order to decide the forcible handover-destination radio base station. In accordance with the fourth aspect of the present invention, however, the zone of base stations to undergo investigation can be broadened or narrowed in accordance with traveling speed, the processing load can be alleviated and the amount of base-station radio resources allocated can be made uniform.

**Brief Description of the Drawings**

Fig. 1 is a diagram illustrating the configuration of a wireless communication system according to the present invention;
Fig. 2 is a diagram useful in describing the content of management by a radio resources manager in an information acquisition unit;
Fig. 3 is a diagram useful in describing the content of management by a measurement information manager;

Fig. 4 is a block diagram of a radio base station;

Fig. 5 is a block diagram of a mobile station;

Fig. 6 is a diagram useful in describing a handover control sequence according to the present invention;

Fig. 7 is a flowchart of handover control processing by a controller of a radio base station control station;

Fig. 8 is a diagram useful in describing the relationship between handover processing timing and a decision threshold value;

Fig. 9 is a flowchart of processing for determining a decision threshold value in a handover decision processing unit that controls the handover-decision threshold value on a per-mobile-station basis depending upon a combination of communication service, communication speed and traveling speed;

Fig. 10 is a flowchart of a third embodiment that decides a decision threshold value by a function;

Fig. 11 is a diagram useful in describing an overview of a fourth embodiment;

Fig. 12 is a flowchart of processing for deciding a zone of forcible handover-destination base stations;

Fig. 13 is a diagram illustrating the basic configuration of a W-CDMA system compliant with the 3GPP specifications; and

Fig. 14 is a diagram useful in describing the procedure of conventional handover control.

Best Mode for Carrying Out the Invention

(A) First embodiment

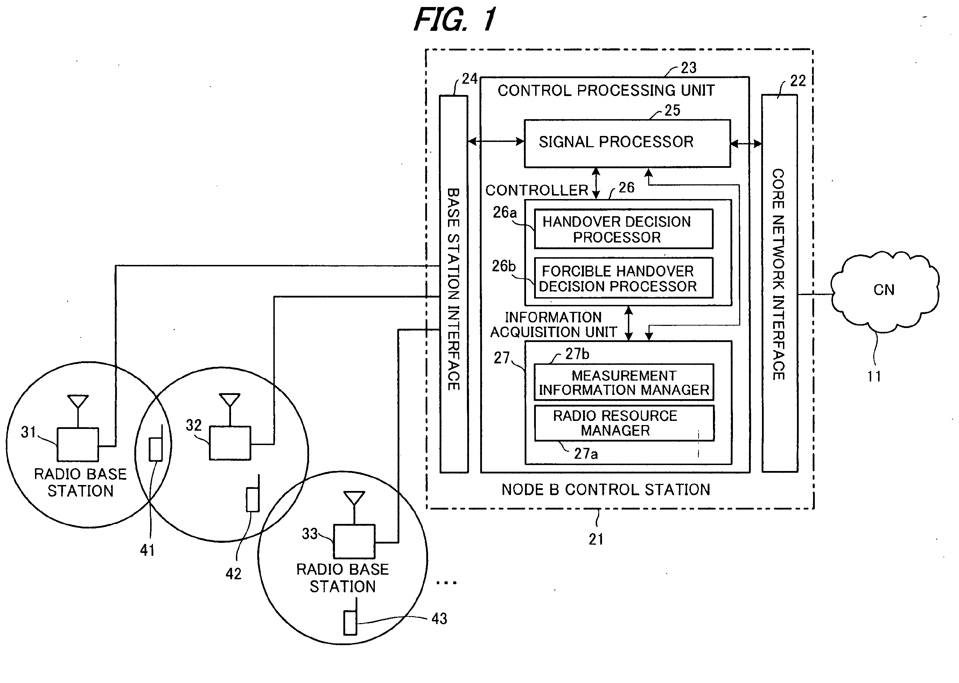

Fig. 1 is a diagram illustrating the configuration of a wireless communication system according to the present invention. The system comprises nodes of four types, namely a core network 11, a Node B control station 21, radio base stations 31, 32, 33, ⋯ and mobile stations 41, 42, 43, ⋯.

(1) Node B control station

The Node B control station 21 has a core network interface 22, a control processing unit 23 and a base station interface 24. The core network interface 22 receives user data and the like from the core network 11 and sends it to a signal processor 25 of the control processing unit 23.

The signal processor 25 transmits the user data from the core network interface 22 and control signals (a terminal-to-control-station control signal and a base-station-to-control-station control signal), which enter from a controller 26, via the base station interface 24. The "terminal-to-control-station control signal" refers to a control signal sent and received between a mobile station and the Node B control station, and the "base-station-to-control-station control signal" refers to a control signal sent and received between a radio base station and the Node B control station.

Further, the signal processor 25 extracts control signals (terminal-to-control-station control signal and base-station-to-control-station control signal), which enter from the base station interface 24, and sends them to an information acquisition unit 27. The base station interface 24 transmits user data and control signals, which are sent from the signal processor 25, to the base stations 31, 32, 33, ⋯, and transmits user data and control signals, which are sent from the base stations, to the signal processor 25.

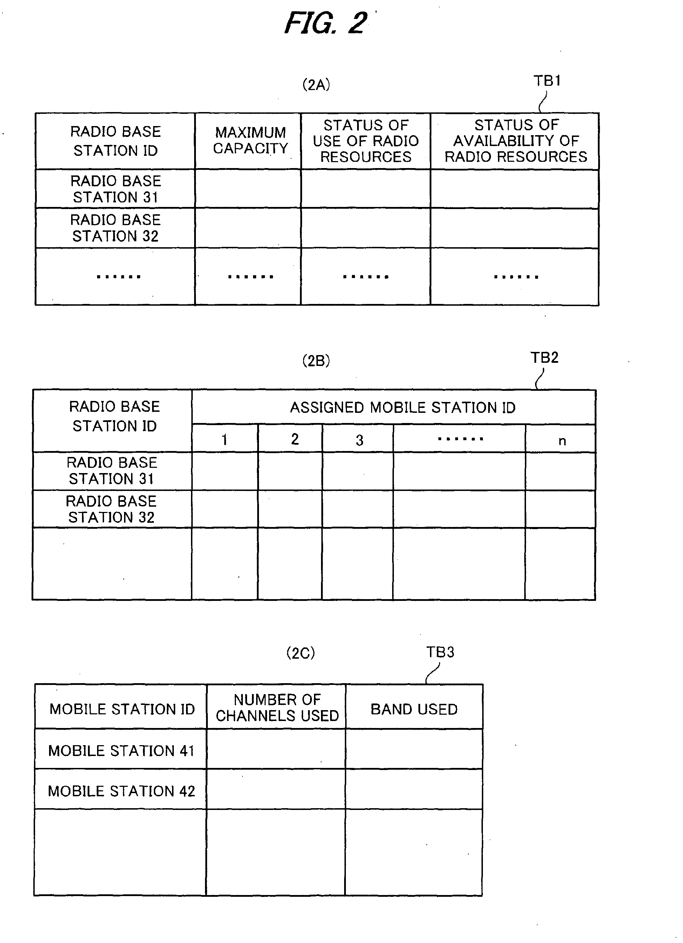

For every radio base station under control in a table TB1 shown in Fig. 2A, a radio resource manager 27a in the information acquisition unit 27 manages the maximum capacity (numbers of users and bands), status of use of radio resources and status of availability of radio resources of the radio base station. Further, the radio resource manager 27a manages IDs of mobile stations accommodated in radio base stations 31, 32, 33, ⋯ under control in a table TB2 shown in Fig. 2B, and manages number of channels used and band used by each mobile station in Fig. 2C. In response to a request for a report on available resources, each of the radio base stations 31, 32, ⋯ sends back an available-resource report response. Accordingly, the radio resource manager 27a extracts the above-mentioned information from this available-resource report response, stores the information in the management tables TB1 to TB3 and performs management.

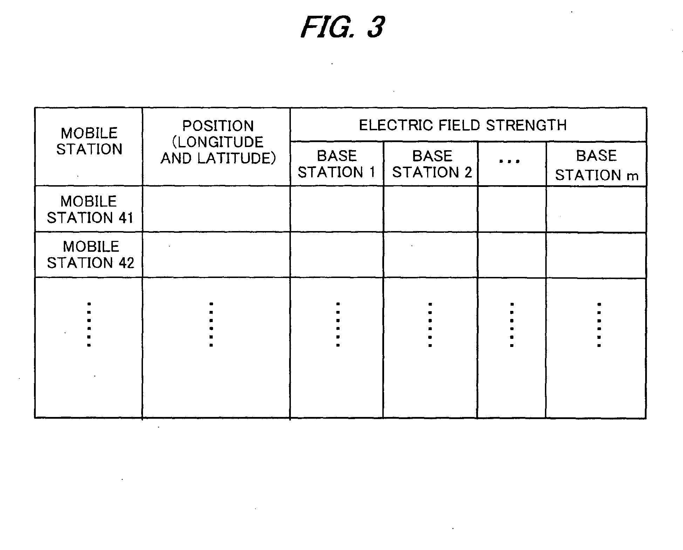

As illustrated in Fig. 3, a measurement information manager 27b responds to a request for a measurement report by storing the electric field strengths of a plurality of base stations and positions (longitude and latitude) of mobile stations that have been measured and reported by each of the mobile stations in response to the measurement report request. It should be noted that the positions (longitude and latitude) of mobile stations need not necessarily be reported.

The controller 26 performs handover control. A handover decision processor 26a in the controller 26 compares the electric field strength of each base station, which is measured and reported by each mobile station in response to the measurement report request, with a set threshold value, decides whether or not to perform handover and, if handover is to be performed, implements handover preparations (establishes a radio link between the handover-destination radio base station and the mobile station). If handover is to be performed, a forcible handover decision processor 26b forcibly hands over one or more mobile stations communicating via the handover-destination base station to another base statio in accordance with a prescribed criterion. As a result, the radio resources of the handover-destination radio base station are freed up and handover can be performed reliably.

(2) Radio base station

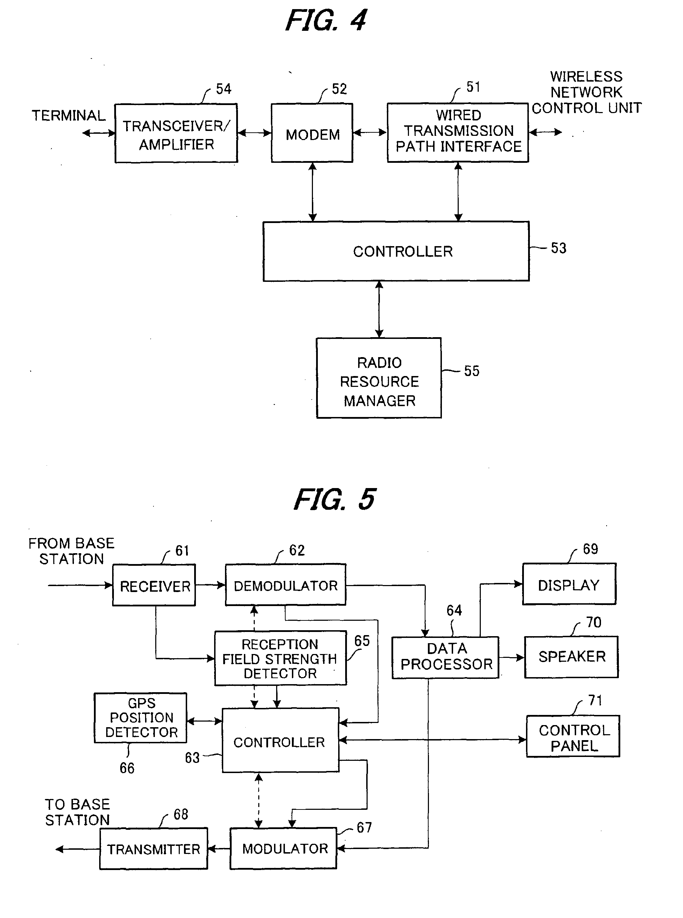

Fig. 4 is a block diagram of a radio base station. A wired transmission path interface 51 sends a modem 52 the user data and terminal-to-control-station control signal that are sent from the Node B control station 21, and sends the base-station-to-control-station control signal to a controller 53. Further, user data and a terminal-to-control-station control signal that enter from the modem 52 and the base-station-to-control-station control signal that enters from the controller 53 are sent to the Node B control station 21. In accordance with a command from the controller 53, the modem 52 applies error-correcting encoding processing and modulation processing to the user data and terminal-to-control-station control signal that have been sent from the wired transmission path interface 51. Further, in accordance with a command from the controller 53, the modem 52 applies demodulation and error correction to the terminal-to-control-station control signal and user data that have been sent from the mobile station, inputs the result to the wired transmission path interface 51 and inputs the control signal, which is from the mobile station to the base station, to the controller 53. A transceiver/amplifier 54 receives the signal from the mobile station, amplifies the signal in a low-noise amplifier and detects the signal. Further, the transceiver/amplifier 54 makes the modulated signal, which enters from the modem 52, an RF signal, amplifies the RF signal in a transmission power amplifier and transmits the amplified signal to the mobile station from an antenna.

The controller 53 receives the base-station-to-control-station control signal (call originate/disconnect control signal) from the wired transmission path interface 51, instructs the modem 52 to set up or release radio resources (channel type and radio channel) and inputs setup or release of radio resources to a radio resource manager 55. Further, upon receiving the base-station-to-control-station control signal (a request to report available resources) from the Node B control station 21, the controller 53 conveys radio-resource management information, which is managed by the radio resource manager 55, to the Node B control station 21 by an available-resource report response.

The radio resource manager 55 manages status of use of radio resources and status of availability of radio resources in the radio base station, manages the IDs of accommodated mobile stations and manages the band used and number of users of each accommodated mobile station. A 64-kbps band is required (enough for three users) in the case of a TV telephone service, a 12.2-kbps band is required (enough for one user) in the case of voice service, and other services also require prescribed bands. Based upon the communication service of an accommodated mobile station, the radio resource manager 55 manages status of use of radio resources and status of availability of radio resources of the radio base station and manages the band used and number of users of each accommodated mobile station.

(c) Mobile station

Fig. 5 is a block diagram of a mobile station. A receiver 61 receives a signal from a base station, frequency-converts this high-frequency signal to a baseband signal and performs detection. A demodulator 62 subjects the receive signal to demodulation and error correction in accordance with the settings from the controller 62, obtains user data and sends the user data to a data processor 64. Further, the demodulator 62 similarly acquires a control-station-to-control station control signal (a control signal between this station and the Node B control station 21) and a base-station-to-control-station control signal (a control signal between this station and the radio base station), which have been sent from the receiver, and sends these control signals to the controller 63. A reception field strength detector 65 detects reception signal strength (reception field strength) in the location zone and in peripheral zones and sends the results of measurement to the controller 63. A GPS unit 66 detects the position of the mobile station and inputs this position to the controller 63.

In accordance with settings from the controller 63, a modulator 67 applies error-correcting encoding and modulation processing to data that has been sent from the data processor 64 and sends the result of processing to a transmitter 68. Further, in accordance with settings from the controller, the modulator 67 similarly applies error-correcting encoding and modulation processing to the control-station-to-control station control signal and base-station-to-control-station control signal that have entered from the controller 63 and sends the result of processing to the transmitter 68. It should be noted that the control-station-to-control station control signal includes result of measurement and position data from the reception field strength detector 65.

The transmitter 68 makes the modulated signal, which enters from the modulator 67, an RF signal, amplifies the RF signal in a transmission power amplifier and transmits the amplified signal from an antenna to the base station.

The data processor 64 executes processing that is in accordance with the type of data that has been sent from the demodulator 62, sends the results to a display unit 69 and speaker 70 and provides an image and voice output. Further, the data processor 64 sends transmit data to the modulator 67. A control panel 71 is for inputting various data.

The controller 63 executes the following processing:

·processing for receiving control signals, which arrive from the a Node B control station and base station, from the demodulator 62;
·processing for transmitting control signals to the Node B control station and base station;
·processing for instructing the modulator 67 and demodulator 62 to set up radio resources (e.g., channel type and radio channel) by a predetermined control procedure based upon the control signal from the Node B control station;
·processing for receiving a call control signal from the Node B control station or radio base station and sending the modulator 67 a control signal that is the response; and
·processing for sending a measurement value and mobile-station position from the reception field strength detector 65 to the modulator 67 in order to notify the Node B control station.

(4) Handover control sequence

·Overview

The mobile stations 41, 42, 43, ··· each respond to a measurement report request by measuring field strength or code error rate or packet discard rate or a plurality of combinations thereof and reporting the result to the Node B control station 21 (this is a measurement report). Each of the radio base stations 31, 32, 33, ··· responds to an available-resource report request by reporting status of use of its own radio resources or status of availability of its own radio resources to the Node B control station 21 (this is an available-resource report). Based upon the measurement report, the Node B control station 21 decides the mobile station to be handed over and the handover-destination radio base station and, on the basis of the available-resource report, decides the base station that is the destination of forcible handover. Next, the Node B control station 21 forcibly hands over a mobile station that is communicating via the handover-destination base station to the forcible handover-destination radio base station and secures the radio resources at this handover-destination radio base station. The Node B control station 21 subsequently causes the above-mentioned base station to be handed over to this handover-destination radio base station.

By virtue of the foregoing operation, it is possible to prevent a situation in which a communication band desired by a user cannot be secured or in which handover cannot be performed, these problems being attributable to lack of radio resources at the handover-destination radio base station.

·Sequence

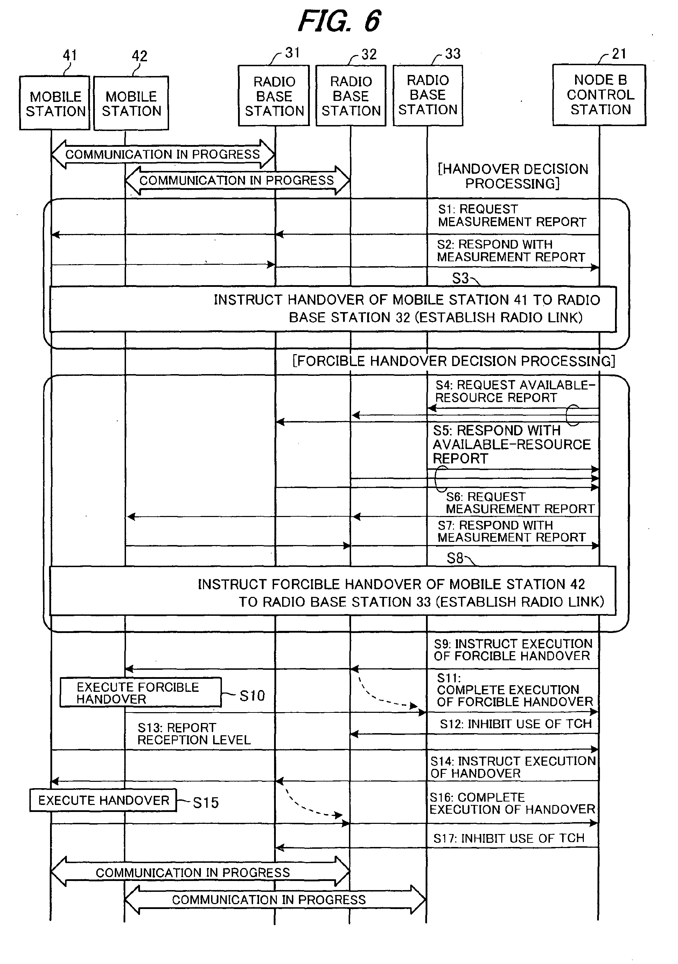

Fig. 6 is a diagram useful in describing the handover control sequence of the present invention. It is assumed here that mobile station 41 is communicating with the radio base station 31 and that mobile station 42 is communicating with radio base station 32.

When the mobile station 41 is communicating with the base station 32, the handover decision processor 26a of the Node B control station 21 requests the mobile station 41 to measure the radio condition (the reception field strength from the base station) and report the result (step S1). Upon receiving the request to measure and report the radio condition, the mobile station 41 measures the reception levels from peripheral base stations and reports the results to the Node B control station 21 via the base station 31 currently communicating (step S2). The measurement information manager 27b of the Node B control station 21 stores the measurement report (the reception field strengths of the peripheral base stations) received from the mobile station.

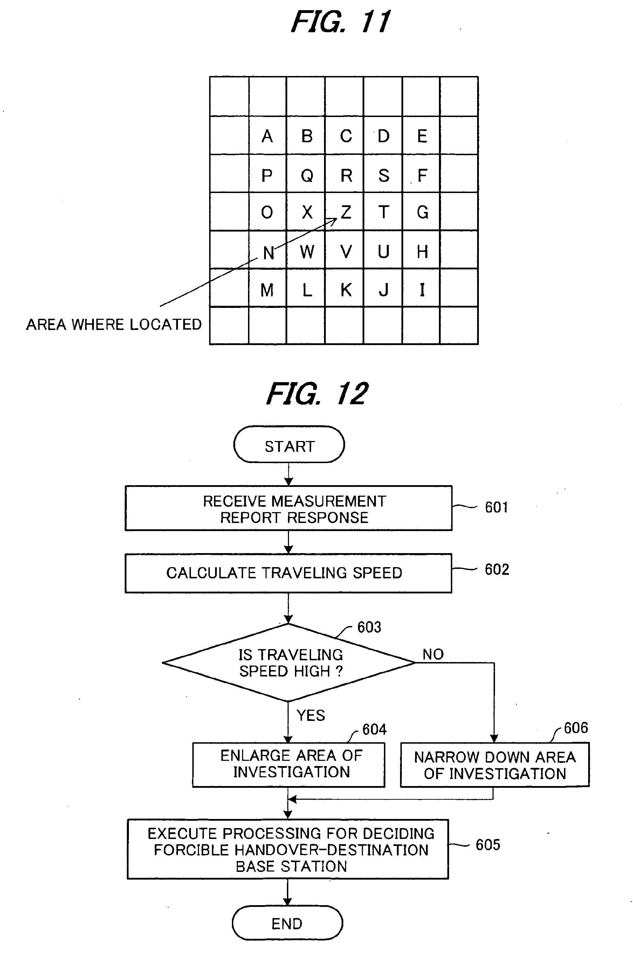

If the handover decision processor 26a decides that the mobile station 41 is to be handed over to the radio base station 32 based upon the report on radio condition, then it instructs the mobile station 41 and radio base station 32 of handover (step S3). More specifically, based upon the measurement report, the handover decision processor 26a determines at step S3 whether execution of handover is necessary or not. For example, if the reception field strength from the adjacent base station 32 is equal to or greater than a set value, then the handover decision processor 26a determines that handover is necessary, regards the adjacent base station 32 as the handover-destination radio base station and instructs this base station of a traffic channel TCH (request additional radio link; see step Fig. 12). In response to the request for an additional radio link, the handover-destination base station 32 sends a response to the request for the additional radio link back to the Node B control station 21. Next, the Node B control station 21 sends the mobile station 41 a request to make handover preparations (an active-set update request) (see Fig. 12). Upon receiving the active-set update request, the mobile station 41 sends an active-set update response back to the Node B control station 21 and establishes a radio link with the base station 32 by communicating on the traffic channel TCH. The above is step S3.

The forcible handover decision processor 26b thenceforth transmits an available-resource report request to each radio base station (step S4). In response, each radio base station sends back an available-resource report response and the radio resource manager 27a stores and manages the state of radio resources shown in Fig. 2 based upon the available-resource report response (step S5).

Further, the forcible handover decision processor 26b requests the mobile station 42 communicating via the handover-destination base station 32 to measure and report on the radio condition (step S6). Upon receiving the request to measure and report on the radio condition, the mobile station 42 measures the reception levels from peripheral base stations and reports the results to the Node B control station 21 via the base station 32 currently communicating (step S7). The measurement information manager 27b of the Node B control station 21 stores the measurement report (the reception field strengths from the base stations peripheral to mobile station 42) received from the mobile station.

Based upon the measurement report response, the forcible handover decision processor 26b decides that the radio base station 33 is to be the forcible handover-destination radio base station of mobile station 42 and sends a forcible-handover command to the mobile station 42 and radio base station 33 for the purpose of performing forcible handover (step S8).

More specifically, at step S8, the forcible handover decision processor 26b decides the forcible handover-destination base station of mobile station 42 based upon the measurement report. If the reception field strength from the base station 33 is equal to or greater than a set value and available resources are maximum, the base station 33 is decided upon as the forcible handover-destination base station. Next, the forcible handover decision processor 26b instructs the base station 33, which is the forcible handover-destination base station, of the traffic channel TCH (request additional radio link). In response to the request for an additional radio link, the base station 33 sends a response to the request for the additional radio link back to the Node B control station 21. Next, the Node B control station 21 sends the mobile station 42 a request to make forcible handover preparations (an active-set update request). Upon receiving the active-set update request, the mobile station 42 sends an active-set update response back to the Node B control station 21 and establishes a radio link with the base station 33 by communicating on the traffic channel TCH. The above is step S8.

The Node B control station 21 thenceforth instructs the mobile station 42 to execute forcible handover (step S9). Upon being instructed to execute forcible handover, the mobile station 42 executes handover and continues communicating via the base station 33 (step S10). Next, the mobile station 42 transmits the fact that handover has been completed to the Node B control station 21 and severs the radio link to the base station 32 (step S11). Upon receiving notification of the fact that handover has been completed, the Node B control station 21 instructs the base station 32 to inhibit use of the traffic channel TCH (step S12), thereby completing forcible handover control. The base station 32 continues communicating via the radio base station 33. Owing to such forcible handover, enough available resources for accommodating the mobile station 41 are acquired in the base station 32.

If under these conditions the reception field strength from the base station 31 falls below the set level continuously in excess of the set period of time, the mobile station 41 notifies the Node B control station 21 of the reception level (step S13). By being so notified, the Node B control station 21 decides to terminate communication between the mobile station 41 and base station 31 and instructs the mobile station 41 to execute handover (step S14). Upon being instructed to execute handover, the mobile station 41 executes handover and continues communicating via the base station 32 (step S15). Next, the mobile station 103 transmits the fact that handover has been completed to the Node B control station 21 and severs the radio link to the base station 31 (step S16). Upon receiving notification of the fact that handover has been completed, the Node B control station 21 instructs the base station 31 to inhibit use of the traffic channel TCH (step S17), thereby completing handover control. The mobile station 41 can subsequently continue communicating via the radio base station 32.

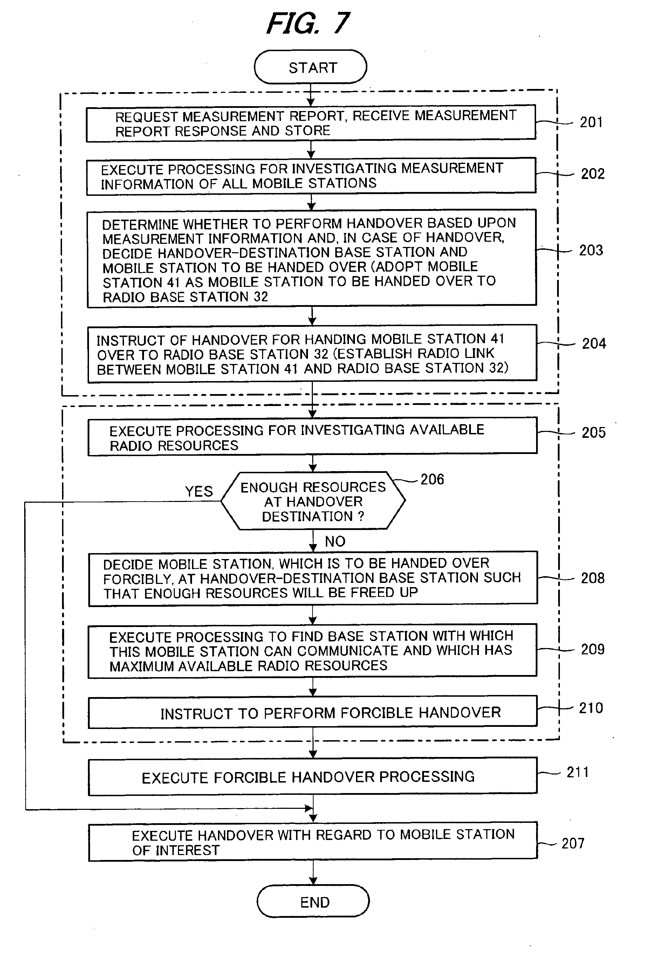

Fig. 7 is a flowchart of handover control processing by the controller 26 of Node B control station 21. By way of a measurement-report request control signal, the handover decision processor 26a of the controller 26 instructs each mobile station (assume that this is mobile station 41) to measure and report on radio conditions, receives the reception levels from peripheral base stations in the form of a measurement-report response message from the mobile station 41 and stores the reception levels in the measurement information manager 27b (step 201).

Next, the handover decision processor 26a investigates the electric field strengths from the base stations (step 202), determines whether the mobile station 41 is to be handed over and, if handover is to be performed, decides the mobile station to be handed over and the handover-destination radio base station (step 203, and note that the mobile station 41 is assumed to be the mobile station that is to be handed over to the radio base station 32).

Next, the handover decision processor 26a issues a handover command to the mobile station 41 and radio base station 32. As a result, a radio link is established between the mobile station 41 and the base station 32 (step 204).

The foregoing marks the end of processing by the handover decision processor and a transition to processing by the forcible handover decision processor 26b.

The forcible handover decision processor 26b transmits a request for an available-resource report and, based upon the available-resource report response to this request, acquires the status of available radio resources of each radio base station (step 205). Next, the forcible handover decision processor 26b checks to determine whether the handover-destination base station 32 has enough available resources for accommodating the mobile station 41 (step 206). If these resources exist, then the forcible handover decision processor subjects the mobile station 41 to handover control similar to that of the prior art without executing forcible handover processing (step 207).

However, if it is found at step 206 that the handover-destination base station 32 does not have enough available resources for handing over the mobile station 41, then one or more mobile stations are forcibly handed over from the handover-destination base station 32 so as to free up sufficient available resources. To achieve this, the forcible handover decision processor determines the mobile stations (assumed to be mobile station 42) currently communicating via the handover-destination base station 32 in such a manner that sufficient available resources will be generated (step 208). It should be noted that if sufficient available resources will be not be generated by deciding upon only one mobile station, then the forcible handover decision processor decides on a plurality of mobile stations.

Next, the forcible handover decision processor searches for and retrieves the base station (forcible handover-destination base station) 33 that makes it possible for the determined base station 42 to communicate and that has the maximum available radio resources (step 209), and instructs the mobile station 42 and forcible handover-destination base station 33 to perform forcible handover (step 210). As a result, a radio link is established between the mobile station 42 and the forcible handover-destination base station 33.

The controller 26 thenceforth instructs the mobile station 42 to execute forcible handover (step 211). Upon being instructed to execute forcible handover, the mobile station 42 executes handover and continues communicating via the base station 33. Owing to such forcible handover, enough resources for accommodating mobile station 31 are freed up in the base station 32.

The controller subsequently subjects the mobile station 41 to handover control similar to that of the prior art (step 207). Specifically, the controller determines that the reception field strength from the base station 31 has fallen below the set level continuously in excess of a set period of time and causes the mobile station 41 to be handed over to the radio base station 32.

·Summary

In summation, the Node B control station 21 judges that there has been a decline in the communication quality of mobile station 41 currently communicating via the base station 31 and hands the mobile station 41 over to the base station 32. The Node B control station 21 then investigates the available radio resources of the base station 32 and determines whether the mobile station 41 is capable of being handed over to this base station. If the base station 32 does not have sufficient available radio resources, then the Node B control station investigates whether a mobile station among mobile stations communicating via the base station 32 is capable of being shifted to another base station. For example, if it is determined that mobile station 42 is capable of being shifted to base station 33, first mobile station 42 is forcibly handed over to base station 33, enough available resources for accommodating the mobile station 41 are secured in the base station 32 and mobile station 41 is thenceforth handed over to base station 32.

·Judgment for deciding on forcible handover-destination base station and forcible handover mobile station

The following two methods are conceivable as criteria for selecting a mobile station to be handed over from the handover-destination base station to another base station (the forcible handover-destination base station):

The first method forcibly hands over a mobile station having the minimum allocated amount of radio resources in the handover-destination base station to a radio base station having the maximum available radio resources (base stations that are communicating at the present time excluded). The second method forcibly hands over a mobile station having the maximum allocated amount of radio resources in the handover-destination base station to a radio base station having the maximum available radio resources (base stations that are communicating at the present time excluded).

In accordance with the first and second methods, the forcible handover-destination base station can be decided in such a manner that the amount of radio resources allocated will be uniformalized among each of the radio base stations. Further, in accordance with the first method, uniformalization can be performed finely but there is a possibility that the number of mobile stations handed over will increase. In accordance with the second method, on the other hand, the degree of uniformalization is somewhat coarse but the number of mobile stations handed over can be reduced.

(B) Second embodiment

In the case of real-time communication (moving picture and voice services), it is required that momentary-interruption time be made as short as possible. Further, in high-speed data communication, handover requires enough time for preparation in order that many radio resources (many mobile stations) within the handover-destination base station may be forcibly handed over. Further, in case of high-speed roaming, handover occurs frequency owing to roaming. This makes it more likely that the required radio resources will not be obtainable. Accordingly, in case of real-time communication, high-speed data communication and communication at the time of high-speed roaming, it is necessary to hasten the handover execution timing of the first embodiment.

In order to hasten handover execution timing, it will suffice to lower a handover-start decision threshold value.

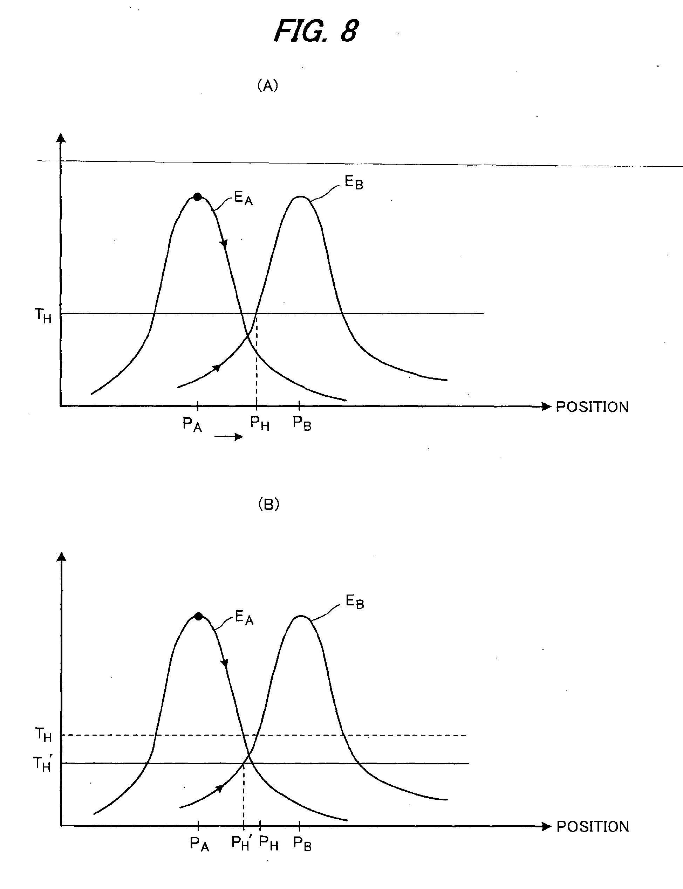

In Fig. 8, (A) and (B) are diagrams for describing the relationship between handover execution timing and decision threshold value. The horizontal axes are plots of the position of a mobile station, and the vertical axes are plots of reception field strengths from radio base stations. Here $P_A$ represents the position of a base station A, $P_B$ the position of a base station B, $E_A$ the reception field strength from base station A and $E_B$ the reception field strength from base station B. When the mobile station is presently within the cell of base station A and then moves beyond the position $P_H$ so that the reception field strength $E_B$ from the adjacent base station B exceeds a threshold value $T_H$, the Node B control station starts handover processing. If the threshold value $T_H$ falls to $T_H'$, as shown at (B) in Fig. 8, the Node B control station starts handover processing from point $P_H'$, which is short of the position $P_H$. That is, if the decision threshold value for starting handover is lowered, then handover execution timing can be hastened.

Thus, according to the second embodiment, handover execution timing can be controlled by varying the handover-start decision threshold value depending upon the combination of communication service, communication speed and traveling speed. More specifically, control is as follows:

(1) The threshold value is set depending upon the distinction between a user of real-time communication such as video and voice and a user of non-real-time communication such as E-mail and Web browsing. For example, handover-execution decision timing of a real-time communication user is hastened and handover-execution decision timing of a non-real time user is retarded.
(2) The threshold value is set depending upon the distinction between a high-speed data communication user and a low-speed data communication user. The handover-execution decision timing of a high-speed data communication user is hastened and the handover-execution decision timing of a low-speed data communication user is retarded.
(3) The handover-execution decision timing of a user traveling at high speed is hastened and the handover-execution decision timing of a user traveling at low speed is retarded.

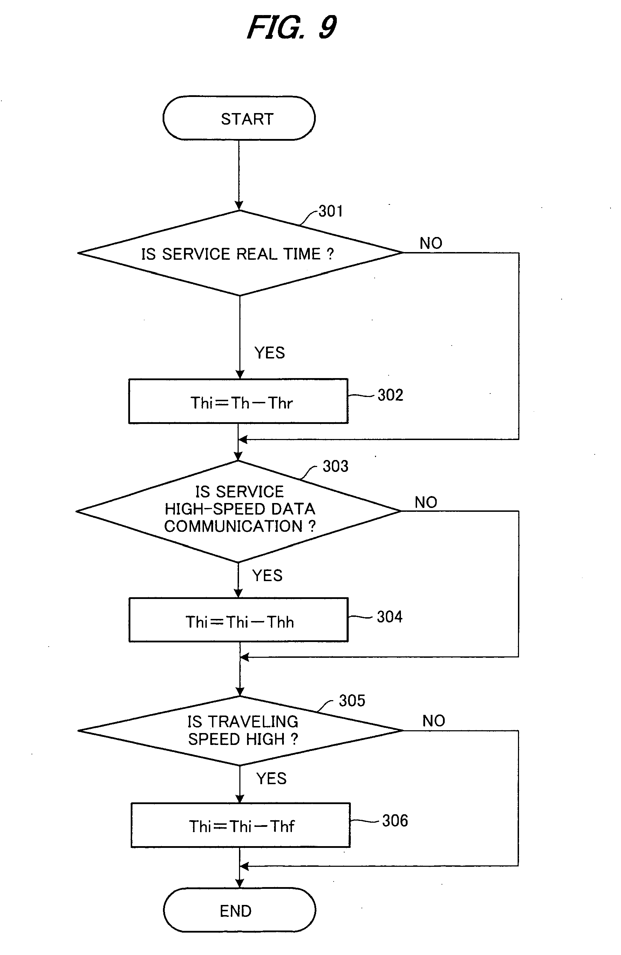

Fig. 9 is a flowchart of processing that decides the decision threshold value, namely for controlling the handover-decision threshold value on a per-mobile-station basis depending upon a combination of communication service, communication speed and traveling speed. It should be noted that Th represents a threshold value at the time of a non-real-time service, low-speed communication and low-speed travel.
It is determined whether the service of the mobile station of interest is a real-time service (step 301). If the service is a real-time service, then a threshold value Thi is lowered by an amount Thr (a threshold-value margin for real time) according to the following equation (step 302):

$$\texttt{Thi = Thi - Thr}$$

If the service is a non-real-time service, however, then the threshold value is not changed.
Next, it is determined whether the service is high-speed data communication (step 303). If the service is high-speed data communication, then threshold value Thi is lowered by an amount Thh (a threshold-value margin for high-speed data communication) according to the following equation (step 304):

$$\texttt{Thi = Thi - Thh}$$

If the service is low-speed data communication, however, then the threshold value is not changed.
Although the decision threshold value of one mobile station can be decided by the foregoing operation, decision values can be decided by similar processing with regard to other mobile stations as well.
The foregoing relates to a case where the decision threshold value is decided based upon a combination of three or more parameters (communication service, communication speed and traveling speed). However, the decision threshold value can also be decided using one or two parameters.
In accordance with the second embodiment, handover execution timing is hastened in communication in case of real-time communication, high-speed data communication and high-speed travel. As a result, momentary interruptions in real-time communication (moving picture and voice services) can be shortened. In addition, even in case of high-speed data communication and high-speed travel, the necessary radio resources can be secured in the handover-destination base station and handover to this base station can be performed.

(C) Third embodiment

A third embodiment is an embodiment that obtains the handover-decision threshold value from a function dependent upon a combination of communication service, communication speed and traveling speed. This embodiment decides the timing of handover decision processing based upon the decision threshold value found.

In a wireless communication system having a base station and a plurality of mobile stations, a handover-decision threshold value Thi of a mobile station i is found as follows:

$$\text{Thi = FuncAi[Th, real-time degree, required}$$
$$\text{communication speed, traveling speed]} \quad (1)$$

$$\text{FuncAi[] = function dependent on real-time degree,}$$
$$\text{required communication speed and traveling}$$
$$\text{speed} \quad (2)$$

Although FuncAi[] is not specifically stipulated, it can be expressed as the following function:

$$\text{FuncAi[Th, real-time degree, required}$$

$$\text{communication speed, traveling speed]}$$
$$\text{= Th + f[real-time degree] + g[required}$$
$$\text{communication speed] + h[traveling speed]} \quad (3)$$

In the above equation above, Th is the handover-decision threshold value used in the prior art. Further, functions f, g and h are linear functions, by way of example.

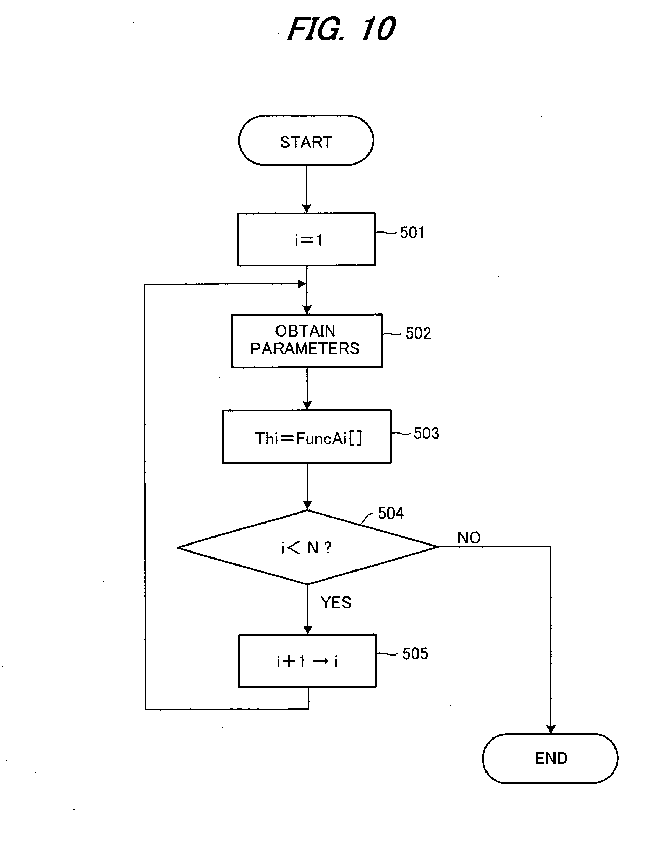

Fig. 10 is a processing flowchart of the third embodiment for deciding each of the decision threshold values of N-number of mobile stations by a function, where N is the number of mobile stations.

The operation i = 1 is performed (step 501), then the parameters (communication service, communication speed and traveling speed) of the ith mobile station are obtained (step 502), these are substituted into the function Func [] of Equation (3) and the decision threshold value of the ith mobile station is calculated (step 503). Next, it is determined whether 1 < N holds, and if the answer is "YES", then i is incremented by i+1 → i (step 505), processing from step 502 onward is executed and the decision threshold value of another mobile station is calculated.

The foregoing relates to a case where the decision threshold value is decided based upon a combination of communication service, communication speed and traveling speed. However, a decision threshold value can also be decided using one or two parameters.

In accordance with the third embodiment, a decision threshold value can be decided flexibly using a function.

(D) Fourth embodiment

Handover processing due to roaming occurs frequently when traveling speed is high. As a consequence, there is also frequent occurrence of the forcible handover processing that uniformalizes the amount of allocated radio resources among each of the radio base stations. Accordingly, the higher the traveling speed of the mobile station to be handed over, the larger is made the zone of base stations to undergo investigation of available radio resources in order to decide the forcible handover-destination base station. This makes it possible to reduce the load of processing for investigating available radio resources

Fig. 11 is a diagram useful in describing an overview of the fourth embodiment. If we let Z represent the area of the handover-destination base station, then areas of interest in regard to forcible handover-destination base stations at the time of low speed are made Q to X and areas of interest in regard to forcible handover-destination base stations at the time of low speed are enlarged to A to X.

Fig. 12 is a flowchart of processing for deciding a zone of forcible handover-destination base stations. If the forcible handover decision processor 26b (Fig. 1) of the Node B control station receives the electric field strength of each base station from the mobile station 42 of the handover-destination base station base station 32 (step 601), then it simultaneously calculates the speed of this mobile station from the mobile-station position data (longitude and latitude) reported from the mobile station and the mobile-station position data received a prescribed period of time earlier (step 602).

Next, the forcible handover decision processor determines whether the traveling speed of the mobile station is high or low (step 603). If the speed is low, the areas Q to X that are a short distance from the handover-destination base station are adopted as areas of interest in regard to forcible handover-destination base stations (step 604). These areas are searched for a base station that is capable of communicating and that has the maximum available resources, and this base station is adopted as the forcible handover-destination base station (step 605). If the traveling speed of the mobile station is high, however, the areas A to X that include areas a long distance from the handover-destination base station are adopted as areas of interest in regard to forcible handover-destination base stations (step 606). These areas are searched for a base station that is capable of communicating and that has the maximum available resources, and this base station is adopted as the forcible handover-destination base station (step 605).

Thus, in accordance with the fourth embodiment, the zone of forcible handover-destination base stations is varied based upon the traveling speed of the base station that is to be handed over, thereby making it possible to select a far base station as the forcible handover-destination base station at the time of high-speed travel. This enables a reduction in the processing load for searching for a forcible handover-destination base station.

·Effects of the present invention

In accordance with the present invention, handover is executed after the required radio resources are acquired beforehand in the radio base station to which the shift is to be made before handover. In addition, the timing at which execution of handover is decided is varied depending upon the communication service and traveling speed. This makes it possible to perform handover efficiently and reliably.

**Claims**

1.  A handover method in a wireless communication system, which has a plurality of base stations and a radio base station control station that controls said plurality of base stations, for performing communication wirelessly between the base stations and a mobile station,
    **characterized by**:

    deciding, with regard to a mobile station that is communicating with a prescribed base station, whether handover of this mobile station is to be executed and, if handover is to be executed, deciding a handover-destination base station;
    forcibly handing over a mobile station, which is already communicating via said handover-destination base station, to another base station as a forcible handover-destination base station; and
    handing over the mobile station that is to be handed over to said handover-destination base station.

2.  A handover method according to claim 1, **characterized by**:

    acquiring available radio resources of the handover-destination base station;
    comparing radio resources that are necessary in order to accommodate said mobile station to be handed over with said available radio resources; and
    executing said forcible handover processing if the available radio resources are inadequate.

3.  A handover method according to claim 1, **characterized in that** said mobile station forcibly handed over is made a mobile station that is already communicating via said handover-destination base station and has a minimum amount of allocated radio resources, and said forcible handover-destination base station is made a base station that is capable of communicating and has a maximum amount of available radio resources.

4.  A handover method according to claim 1, **characterized in that** said mobile station forcibly handed over is made a mobile station that is already communicating via said handover-destination base station and has a maximum amount of allocated radio resources, and said forcible handover-destination base station is made a base station that is capable of communicating and has a maximum amount of available radio resources.

5.  A handover method according to claim 1, **characterized by** controlling handover execution timing for determining whether handover is to be executed or not based upon a combination of at least one or two or more of type of communication service, communication speed and traveling speed of the mobile station.

**6.** A handover method according to claim 5, **characterized by** deciding said handover execution timing on a per-mobile-station basis and hastening said handover execution timing increasingly the higher the level of real-time service, or the higher the communication speed or the higher the traveling speed.

**7.** A handover method according to claim 5, **characterized by** calculating said handover execution timing using a function in which at least one or two or more of communication service, communication speed and traveling speed of the mobile station serve as variables.

**8.** A handover method according to claim 1, **characterized by** varying a zone of a search for a forcible handover-destination base station in accordance with the traveling speed of the mobile station to be handed over.

**9.** A radio base station control station in a wireless communication system, which has a plurality of base stations and a radio base station control station that controls said plurality of base stations, for performing communication wirelessly between the base stations and a mobile station, **characterized by** comprising:

a handover decision processing unit for deciding, with regard to a mobile station that is communicating with a prescribed base station, whether handover of this mobile station is to be executed and, if handover is to be executed, deciding a handover-destination base station;
a forcible handover decision processing unit for forcibly handing over a mobile station, which is already communicating via said handover-destination base station, to another base station as a forcible handover-destination base station; and
means for handing over the mobile station that is to be handed over to said handover-destination base station after execution of forcible handover.

**10.** A radio base station control station according to claim 9, **characterized in that** said forcible handover decision processing unit includes:

means for acquiring available radio resources of the handover-destination base station; and
means for comparing radio resources that are necessary in order to accommodate said mobile station to be handed over with said available radio resources and executing said forcible handover processing if the available radio resources are inadequate.

**11.** A radio base station control station according to claim 9, **characterized in that** said forcible handover decision processing unit includes means for adopting a mobile station, which is already communicating via said handover-destination base station and has a minimum amount of allocated radio resources, as said mobile station forcibly handed over, and adopts a base station, which is capable of communicating and has a maximum amount of available radio resources, as said forcible handover-destination base station.

**12.** A radio base station control station according to claim 9, **characterized in that** said forcible handover decision processing unit includes means for adopting a mobile station, which is already communicating via said handover-destination base station and has a maximum amount of allocated radio resources, as said mobile station forcibly handed over, and adopts a base station, which is capable of communicating and has a maximum amount of available radio resources, as said forcible handover-destination base station.

**13.** A radio base station control station according to claim 9, **characterized in that** said handover decision processing unit includes means for deciding handover execution timing for determining whether handover is to be executed or not based upon a combination of at least one or two or more of type of communication service, communication speed and traveling speed of the mobile station.

**14.** A radio base station control station according to claim 9, **characterized in that** said handover execution timing deciding means decides said handover execution timing on a per-mobile-station basis and hastens said handover execution timing increasingly the higher the level of real-time service, or the higher the communication speed or the higher the traveling speed.

**15.** A radio base station control station according to claim 13, **characterized in that** said handover decision processing unit includes means for calculating said handover execution timing using a function in which at least one or two or more of communication service, communication speed and traveling speed of the mobile station serve as variables.

**16.** A radio base station control station according to claim 9, **characterized in that** said forcible handover decision processing unit includes means for varying a zone of a search for the forcible handover-destination base station in accordance with the traveling speed of a mobile station to be handed over.

**FIG. 1**

# FIG. 2

(2A) TB1

| RADIO BASE STATION ID | MAXIMUM CAPACITY | STATUS OF USE OF RADIO RESOURCES | STATUS OF AVAILABILITY OF RADIO RESOURCES |
|---|---|---|---|
| RADIO BASE STATION 31 | | | |
| RADIO BASE STATION 32 | | | |
| ...... | ...... | ...... | ...... |

(2B) TB2

| RADIO BASE STATION ID | ASSIGNED MOBILE STATION ID | | | | |
|---|---|---|---|---|---|
| | 1 | 2 | 3 | ...... | n |
| RADIO BASE STATION 31 | | | | | |
| RADIO BASE STATION 32 | | | | | |
| | | | | | |

(2C) TB3

| MOBILE STATION ID | NUMBER OF CHANNELS USED | BAND USED |
|---|---|---|
| MOBILE STATION 41 | | |
| MOBILE STATION 42 | | |
| | | |

# FIG. 3

| MOBILE STATION | POSITION (LONGITUDE AND LATITUDE) | ELECTRIC FIELD STRENGTH | | | |
|---|---|---|---|---|---|
| | | BASE STATION 1 | BASE STATION 2 | ... | BASE STATION m |
| MOBILE STATION 41 | | | | | |
| MOBILE STATION 42 | | | | | |
| ⋮ | ⋮ | ⋮ | ⋮ | ⋮ | ⋮ |

## FIG. 4

TERMINAL ⟷ | TRANSCEIVER/ AMPLIFIER | 54 ⟷ | MODEM | 52 ⟷ | WIRED TRANSMISSION PATH INTERFACE | 51 ⟷ WIRELESS NETWORK CONTROL UNIT

CONTROLLER 53

RADIO RESOURCE MANAGER 55

## FIG. 5

FROM BASE STATION → | RECEIVER | 61 → | DEMODULATOR | 62

DISPLAY 69

RECEPTION FIELD STRENGTH DETECTOR 65

DATA PROCESSOR 64

SPEAKER 70

GPS POSITION DETECTOR 66

CONTROLLER 63

CONTROL PANEL 71

TO BASE STATION ← | TRANSMITTER | 68 ← | MODULATOR | 67

# FIG. 6

| 41<br>MOBILE<br>STATION | 42<br>MOBILE<br>STATION | 31<br>RADIO<br>BASE<br>STATION | 32<br>RADIO<br>BASE<br>STATION | 33<br>RADIO<br>BASE<br>STATION | 21<br>NODE B<br>CONTROL<br>STATION |

COMMUNICATION IN PROGRESS

COMMUNICATION IN PROGRESS

[HANDOVER DECISION PROCESSING]

S1: REQUEST MEASUREMENT REPORT

S2: RESPOND WITH MEASUREMENT REPORT

S3 — INSTRUCT HANDOVER OF MOBILE STATION 41 TO RADIO BASE STATION 32 (ESTABLISH RADIO LINK)

[FORCIBLE HANDOVER DECISION PROCESSING]

S4: REQUEST AVAILABLE-RESOURCE REPORT

S5: RESPOND WITH AVAILABLE-RESOURCE REPORT

S6: REQUEST MEASUREMENT REPORT

S7: RESPOND WITH MEASUREMENT REPORT

S8 — INSTRUCT FORCIBLE HANDOVER OF MOBILE STATION 42 TO RADIO BASE STATION 33 (ESTABLISH RADIO LINK)

S9: INSTRUCT EXECUTION OF FORCIBLE HANDOVER

EXECUTE FORCIBLE HANDOVER — S10

S11: COMPLETE EXECUTION OF FORCIBLE HANDOVER

S13: REPORT RECEPTION LEVEL

S12: INHIBIT USE OF TCH

S14: INSTRUCT EXECUTION OF HANDOVER

EXECUTE HANDOVER — S15

S16: COMPLETE EXECUTION OF HANDOVER

S17: INHIBIT USE OF TCH

COMMUNICATION IN PROGRESS

COMMUNICATION IN PROGRESS

# FIG. 7

START

REQUEST MEASUREMENT REPORT, RECEIVE MEASUREMENT REPORT RESPONSE AND STORE — 201

EXECUTE PROCESSING FOR INVESTIGATING MEASUREMENT INFORMATION OF ALL MOBILE STATIONS — 202

DETERMINE WHETHER TO PERFORM HANDOVER BASED UPON MEASUREMENT INFORMATION AND, IN CASE OF HANDOVER, DECIDE HANDOVER-DESTINATION BASE STATION AND MOBILE STATION TO BE HANDED OVER (ADOPT MOBILE STATION 41 AS MOBILE STATION TO BE HANDED OVER TO RADIO BASE STATION 32 — 203

INSTRUCT OF HANDOVER FOR HANDING MOBILE STATION 41 OVER TO RADIO BASE STATION 32 (ESTABLISH RADIO LINK BETWEEN MOBILE STATION 41 AND RADIO BASE STATION 32) — 204

EXECUTE PROCESSING FOR INVESTIGATING AVAILABLE RADIO RESOURCES — 205

ENOUGH RESOURCES AT HANDOVER DESTINATION ? — 206

YES

NO

DECIDE MOBILE STATION, WHICH IS TO BE HANDED OVER FORCIBLY, AT HANDOVER-DESTINATION BASE STATION SUCH THAT ENOUGH RESOURCES WILL BE FREED UP — 208

EXECUTE PROCESSING TO FIND BASE STATION WITH WHICH THIS MOBILE STATION CAN COMMUNICATE AND WHICH HAS MAXIMUM AVAILABLE RADIO RESOURCES — 209

INSTRUCT TO PERFORM FORCIBLE HANDOVER — 210

EXECUTE FORCIBLE HANDOVER PROCESSING — 211

EXECUTE HANDOVER WITH REGARD TO MOBILE STATION OF INTEREST — 207

END

FIG. 8

(A)

(B)

# FIG. 9

```
                    ┌──────────┐
                    │  START   │
                    └──────────┘
                         │
                         ▼
                    ╱─────────301──────╲          NO
              ╱   IS SERVICE REAL TIME ?  ╲───────────────┐
              ╲                           ╱                │
                    ╲─────────────────╱                   │
                         │                                │
                        YES                               │
                         ▼                                │
                  ┌──────────────────┐  ─302              │
                  │   Thi = Th — Thr │                    │
                  └──────────────────┘                    │
                         │                                │
                         ▼◄───────────────────────────────┘
                    ╱─────────303──────╲
              ╱      IS SERVICE          ╲        NO
              ╲    HIGH-SPEED DATA       ╱───────────────┐
                ╲  COMMUNICATION ?     ╱                 │
                    ╲──────────────╱                     │
                         │                               │
                        YES                              │
                         ▼                               │
                  ┌──────────────────┐  ─304             │
                  │  Thi = Thi — Thh │                   │
                  └──────────────────┘                   │
                         │                               │
                         ▼◄──────────────────────────────┘
                    ╱─────────305──────╲
              ╱      IS TRAVELING        ╲       NO
              ╲      SPEED HIGH ?        ╱───────────────┐
                    ╲──────────────╱                     │
                         │                               │
                        YES                              │
                         ▼                               │
                  ┌──────────────────┐  ─306             │
                  │  Thi = Thi — Thf │                   │
                  └──────────────────┘                   │
                         │                               │
                         ▼◄──────────────────────────────┘
                    ┌──────────┐
                    │   END    │
                    └──────────┘
```

## FIG. 10

```
        ┌─────────┐
        │  START  │
        └────┬────┘
             │
             ▼
     ┌──────────────┐
     │    i = 1     │── 501
     └──────┬───────┘
            │
            ▼
     ┌──────────────┐
     │   OBTAIN     │── 502
     │  PARAMETERS  │
     └──────┬───────┘
            │
            ▼
     ┌──────────────┐
     │ Thi=FuncAi[] │── 503
     └──────┬───────┘
            │        504
            ▼   ╱─────────╲        NO
         ╱───────────────────╲─────────┐
         ╲       i < N ?     ╱         │
          ╲─────────────────╱          │
                 │ YES                 │
                 ▼                     │
          ┌──────────────┐             │
          │   i+1 → i    │── 505       │
          └──────┬───────┘             │
                 │                     ▼
                              ┌─────────────┐
                              │     END     │
                              └─────────────┘
```

## FIG. 11

| | | | | | | |
|---|---|---|---|---|---|---|
| | A | B | C | D | E | |
| | P | Q | R | S | F | |
| | O | X | Z | T | G | |
| | N | W | V | U | H | |
| | M | L | K | J | I | |
| | | | | | | |

AREA WHERE LOCATED

## FIG. 12

```
        ┌─────────────┐
        │    START    │
        └─────────────┘
               │
               ▼
┌─────────────────────────────┐
│   RECEIVE MEASUREMENT        │ ~ 601
│   REPORT RESPONSE            │
└─────────────────────────────┘
               │
               ▼
┌─────────────────────────────┐
│  CALCULATE TRAVELING SPEED   │ ~ 602
└─────────────────────────────┘
               │
               ▼
         ╱─────────╲  603
        ╱ IS TRAVELING ╲   NO
       ╱  SPEED HIGH ?   ╲──────────┐
        ╲               ╱           │
         ╲─────────────╱            │
             │ YES                  │
             ▼  604                 ▼  606
┌──────────────────┐   ┌──────────────────┐
│  ENLARGE AREA OF │   │  NARROW DOWN AREA │
│  INVESTIGATION   │   │  OF INVESTIGATION │
└──────────────────┘   └──────────────────┘
             │                      │
             ▼◄─────────────────────┘
┌─────────────────────────────────────┐
│  EXECUTE PROCESSING FOR DECIDING     │ ~ 605
│  FORCIBLE HANDOVER-DESTINATION       │
│  BASE STATION                        │
└─────────────────────────────────────┘
               │
               ▼
        ┌─────────────┐
        │     END     │
        └─────────────┘
```

# FIG. 13

## FIG. 14

COMMUNICATION IN PROGRESS

[HANDOVER DECISION PROCESSING]

S1: REQUEST MEASUREMENT REPORT

S2: RESPOND WITH MEASUREMENT REPORT

S3: REQUEST ADDITIONAL RADIO LINK

S4: RESPOND WITH ADDITIONAL RADIO LINK

S5: REQUEST UPDATE OF ACTIVE SET

S6: RESPOND WITH UPDATE OF ACTIVE SET

S7: ESTABLISH RADIO LINK

S8: REPORT RECEPTION LEVEL

S9: INSTRUCT EXECUTION OF HANDOVER

S10: EXECUTE HANDOVER

S11: COMPLETE EXECUTION OF HANDOVER

S12: INHIBIT USE OF TCH

COMMUNICATION IN PROGRESS

103 MOBILE STATION

MOBILE STATION

102-1 RADIO BASE STATION

102-2 RADIO BASE STATION

102-3 RADIO BASE STATION

101 NODE B ONTROL STATION

EP 1 659 806 A1

## INTERNATIONAL SEARCH REPORT

| International application No. |
|---|
| PCT/JP03/10815 |

| A. CLASSIFICATION OF SUBJECT MATTER |
|---|
| Int.Cl⁷  H04Q7/22 |

According to International Patent Classification (IPC) or to both national classification and IPC

| B. FIELDS SEARCHED |
|---|
| Minimum documentation searched (classification system followed by classification symbols)<br>    Int.Cl⁷  H04B7/24-7/26, H04Q7/00-7/38 |

Documentation searched other than minimum documentation to the extent that such documents are included in the fields searched

| Jitsuyo Shinan Koho | 1922–1996 | Toroku Jitsuyo Shinan Koho | 1994–2003 |
|---|---|---|---|
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 5-68284 A  (Nippon Telegraph And Telephone Corp.),<br>19 March, 1993 (19.03.93),<br>Page 3, right column, line 1 to page 4, left column, line 3; Figs. 1, 2<br>(Family: none) | 1,2,9,10<br>3-8,11-16 |
| Y | JP 2001-251658 A  (NTT Docomo Inc.),<br>14 September, 2001 (14.09.01),<br>Page 9, left column, line 26 to right column, line 47; page 11, left column, line 6 to page 12, left column, line 33; Figs. 1, 2, 9 to 11<br>& WO 01/49059 A1       & EP 1156693 A1<br>& KR 2001113715 A      & CN 1342377 A<br>& US 2002/0160777 A1 | 3,4,11,12 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    27 November, 2003 (27.11.03) | Date of mailing of the international search report<br>    09 December, 2003 (09.12.03) |
|---|---|
| Name and mailing address of the ISA/<br>    Japanese Patent Office | Authorized officer |
| Facsimile No. | Telephone No. |

Form PCT/ISA/210 (second sheet) (July 1998)

# INTERNATIONAL SEARCH REPORT

| International application No. |
| --- |
| PCT/JP03/10815 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2001-78242 A (Fujitsu Ltd.), 23 March, 2001 (23.03.01), Page 3, right column, line 35 to page 4, right column, line 3; Fig. 1 (Family: none) | 5-7,13-15 |
| Y | JP 9-200858 A (Hitachi, Ltd.), 31 July, 1997 (31.07.97), Page 5, left column, line 41 to right column, line 48; Figs. 1, 2 & EP 0785696 A2 & AU 9710164 A & KR 97060747 A & CN 1166116 A | 5-7,13-15 |
| Y | JP 11-27719 A (Uniden Corp.), 29 January, 1999 (29.01.99), Page 5, right column, line 18 to page 6, left column, line 44; Figs. 2, 3 (Family: none) | 8,16 |

Form PCT/ISA/210 (continuation of second sheet) (July 1998)